# EUROPEAN PATENT SPECIFICATION

(11) **EP 3 249 250 B1**
(45) Date of publication and mention of the grant of the patent: **16.10.2019**
(21) Application number: 17172511.2
(22) Date of filing: 23.05.2017
(51) Int. Cl.: F16C 19/18, F16M 11/08, F16M 11/20

(54) **A ROTATABLE JOINT FOR A SUSPENSION ARM OF A CONTROL DEVICE OR SIMILAR APPARATUS**
DREHVERBINDUNG FÜR EINEN QUERLENKER EINER STEUERUNGSVORRICHTUNG ODER ÄHNLICHEN VORRICHTUNG
JOINT ROTATIF POUR UN BRAS DE SUSPENSION D'UN DISPOSITIF DE COMMANDE OU D'UN APPAREIL SIMILAIRE

(30) Priority: 23.05.2016 IT UA20163687
(43) Date of publication of application: 29.11.2017
(73) Proprietor: Euro Inox Quality, 36015 Schio, Vicenza (IT)
(72) Inventor: DALLA FONTANA, Enrico, 36011 ARSIERO VICENZA (IT)
(74) Representative: Maroscia, Antonio

(56) References cited:
- GB-A- 2 075 114
- US-A1- 2015 191 044

## Description

### Field of the invention

The present invention generally finds application in the field of mechanical coupling systems for suspended arms and particularly relates to a rotatable joint for use in a suspension arm of a control panel or a similar apparatus.

### Background art

Rotatable joints have been long known to be used for coupling mechanical parts, such as a suspension arm that connects a switchboard to a machine tool or a diagnostic apparatus.

These joints may comprise plain bearings having a ring made of an antifriction material or rolling bearings with a row of rollers or balls.

A first drawback of these joints is that they cannot achieve stable and efficient coupling between the arm and the supported element.

Furthermore, they provide a very limited relative freedom of rotation between the arm and the supported element and require continuous maintenance to ensure rotation thereof.

In an attempt to at least partially obviate this drawback, rotatable joints for suspension arms have been developed, which comprise at least one pair of rows of rolling elements, adapted to allow relative rotation of the parts of the joint.

US6095468 discloses a rotatable joint comprising two coaxial cylindrical elements, i.e. inner and outer elements, which are coupled together with a pair of coaxial ball bearings interposed therebetween.

Namely, one of the cylindrical elements is stably coupled to one end of the arm and the other cylindrical element is stably coupled to a frame of a machine, a fixed wall or a control panel of the machine, which is designed to rotate relative to the arm.

One of the bearings rests upon a flange that is formed in the top edge of the outer cylindrical element, whereas the other bearing rests upon a plate that is fixed to the upper portion of the inner cylindrical element and to the suspension arm.

A first drawback of this known arrangement is that the rotatable joint cannot simultaneously support axial and radial thrusts acting upon the bearings and cannot withstand the bending stress generated between the supported element and the anchor point of the arm.

This drawback causes considerable strain on and quick deterioration of the bearings, which hence require frequent replacement or servicing, and reduces the freedom of rotation of the joint elements, possibly to seizure thereof.

A further drawback is that these joints are likely to have dust or other foreign impurities build up therein, which might prevent proper operation thereof as well as free rotation of their main parts.

Furthermore, this drawback will considerably increase maintenance and downtimes, due to the need of periodically disassemble the joint and clean it internally.
US6488254 discloses a support base for rotatable coupling with the pole of an outdoor umbrella. The base comprises an inner element and an outer element, which are mutually rotatably coupled by a pair of axially offset ball bearings.
US20150191044 discloses a bearing module for rotatable attaching a wheel to a vehicle body. The module comprises an inner element and an outer element which are mutually rotatably coupled and an annular element coupled to one end of the inner element.

### Technical Problem

In view of the prior art, the technical problem addressed by the present invention consists in providing a rotatable joint that affords free rotation of the suspension arm and the control panel with time, with reduced maintenance requirements.

### Disclosure of the invention

The object of the present invention is to overcome the above drawback, by providing a rotatable joint for a suspension arm of a control panel that is highly efficient and relatively cost-effective.

A particular object of the present invention is to provide a rotatable joint of the aforementioned type, in which the bearings can simultaneously withstand axial and radial thrusts.

A further object of the present invention is to provide a rotatable joint of the aforementioned type, that can easily withstand the bending stress produced by the suspension arm.

Another object of the present invention is to provide a rotatable joint of the aforementioned type, that ensure constant smooth rotation of a suspension arm relative to the supported element.

A further object of the present invention is to provide a rotatable joint of the aforementioned type whose bearings require much smaller maintenance.

Another object of the present invention is to provide a rotatable joint of the aforementioned type, that is not affected by foreign dust or impurity build-up therein.

These and other objects, as better explained hereafter, are fulfilled by a rotatable joint for use with a suspension arm of a control panel of a machine tool or a similar apparatus as defined in claim 1, which comprises an outer cylindrical element, that is adapted to be secured to a machine or a control panel and defines a first longitudinal axis and an inner cylindrical element; that is adapted to be secured to a suspension arm of a control panel and defines a second longitudinal axis.

The inner cylindrical element and the outer cylindrical element are mutually and rotatably coupled about a common longitudinal axis, with first and second axially offset ball bearings with substantially equal diameters interposed therebetween.

The joint further comprises an annular end element that is adapted to be coupled to the inner cylindrical element and the inner surface thereof and to define, in combination with the inner surface of the outer cylindrical element and the outer surface of the inner cylindrical element, first and second raceways for the ball bearings, which consist of rows of balls.

The balls interact with the raceways both axially and radially to limit the relative inclination of the first and second longitudinal axes.

Advantageous embodiments of the invention are obtained in accordance with the dependent claims.

### Brief description of the drawings

Further features and advantages of the invention will be more apparent from the detailed description of a preferred, non-exclusive embodiment of a rotatable joint for use with a suspension arm of a control panel of the invention, which is described as a non-limiting example with the help of the annexed drawings, in which:
FIG. 1 is a front view of a suspension arm of a machine which comprises respective rotatable joints of the invention at its ends;
FIG. 2 is a perspective view of the rotatable joint of the invention;
FIG. 3 is a broken-away perspective view of the rotatable joint of Fig. 2;
FIG. 4 is a broken-away front view of the rotatable joint of Fig. 2;
FIG. 5 is an exploded perspective view of the rotatable joint of Fig. 2.

### Detailed description of a preferred exemplary embodiment

Particularly referring to the figures, there is shown a rotatable joint, generally designated by numeral 1, which is adapted to be fitted to a suspension arm B of a control panel C of a general machine M or a similar apparatus.

By way of example, the machine M may be a CNC machine tool or a diagnostic or biomedical apparatus, without departure from the scope of the invention.

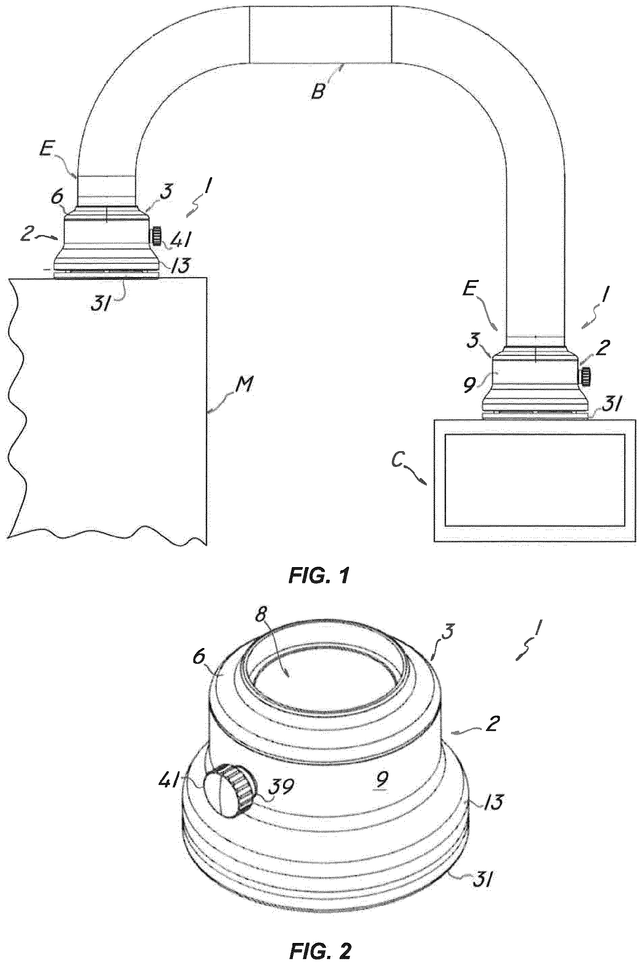

As shown in FIG. 1, in which the machine M and the control panel C are schematically shown, the joint 1 may be mounted to one or both of the ends E of a suspension arm B, such that the latter will be able to rotate relative to both the machine M and the control panel C.

In a preferred embodiment of the invention, the joint 1 comprises an outer cylindrical element 2, which is operably associated with the control panel C or the machine M and defines a first longitudinal axis X and an inner cylindrical element 3 which is adapted to be secured to the suspension arm B and defines a second longitudinal axis X'.

Advantageously, the inner cylindrical element 3 generally has a mushroom shape and comprises a substantially tubular lower portion 4 with an outer cylindrical surface 5 and an annular projection 6 which is directed radially outwards to define joining step 7 having a circular arc profile with the outer cylindrical surface 5.

The end edge of the annular projection 6 may have a substantially circular seat 8 for receiving and securing an end E of the suspension arm B.

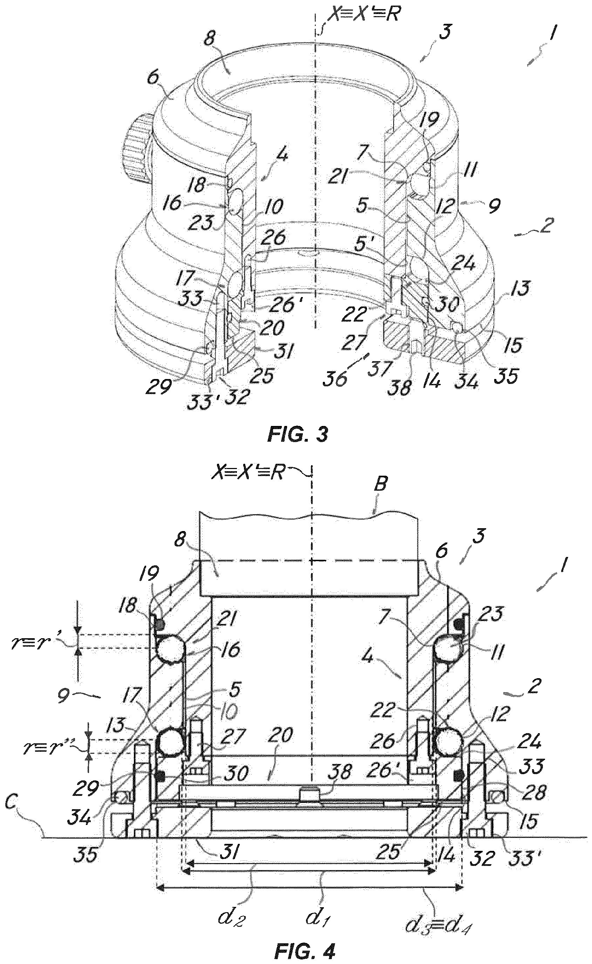

As best shown in FIGS. 3 and 4, the outer cylindrical element 2 comprises a tubular wall 9 with an inner surface 10 having first 11 and second 12 grooves having a circular arc profile in axially offset relationship.

Conveniently, the inside diameter d₁ of the tubular wall 9 of the cylindrical element 2 is slightly greater, with a diametrical clearance of the order of a few tenths of a mm, than the outside diameter d₂ of the tubular portion 4 of the inner cylindrical element 3 for rotatable coupling of the two elements 2, 3.

Furthermore, the outer cylindrical element 2 generally has a bell shape, with an expanded lower end 13 which, upon coupling with the inner cylindrical element 3 is at the longitudinal end opposite to the annular projection 6 thereof.

The expanded end edge 13 has a circular opening 14 with an inside diameter d₃ and a flat front surface 15.

The two cylindrical elements 2, 3 are rotatably coupled to each other about a common longitudinal axis R with the interposition of at least one first 16 and one second 17 axially offset ball bearings having substantially equal outside diameters.

A first O-ring 18 is also provided, as shown in FIGS. 3 to 5, between the inner cylindrical element 3 and the outer cylindrical element 2 and is accommodated in a first annular recess 19 formed in the annular projection 6 of the inner element 3.

According to a peculiar aspect of the invention, the joint 1 comprises an annular end element 20 which is adapted to be coupled to one end of the inner cylindrical element 3. Furthermore, the inner cylindrical element 3, the outer cylindrical element 2 and the annular end element 20 have mutually facing surfaces, which are adapted to define first 21 and second 22 raceways 22, once they have been coupled together.

The first bearing 16 and the second bearing 17 consist of ball rows 23 which are received in the raceways 21, 22 to interact therewith in both radial and axial directions to limit the relative inclination of the first X and second X' longitudinal axes.

As the balls 23 slide within the raceways 21, 22, their axial and radial movements are prevented by the inner and outer surfaces of the elements 2, 3, 20 of the joint 1.

This configuration of the raceways 21, 22 and their multidirectional interaction with the balls 23 allows the outer 2 and inner 2 cylindrical elements to be maintained substantially and constantly aligned with the common longitudinal axis R, to thereby restrict both their mutual radial and axial movements and the mutual inclination of their respective longitudinal axes X, X', thereby ensuring optimal operation and a longer life of the joint.

Conveniently, the balls 23 of the bearings 16, 17 will be selected with a diameter, and hence a radius r, that corresponds to the radius of curvature r' of both the circular arc profile of the step 7 and the grooves 11, 12 of the outer cylindrical element 2.

For this purpose, the front surface 24 of the annular element 20 will be conveniently formed with a cross section having a circular arc profile with a radius of curvature r" equal to the radius r of the balls 23.

As clearly shown in FIGS. 3 and 4, the first raceway 21 is delimited by the step 7 of the inner cylindrical element 3 that faces the first groove 11.

The second raceway 22 is delimited by the second groove 12 that faces the specially formed surface 24 of the annular element 20 and an end portion 5' of the outer wall 5 of the inner cylindrical element 3 that is located longitudinally opposite to the step 7.

Advantageously, the annular element 20 may have a diameter d₄ substantially corresponding to the diameter d₃ of the circular opening 14 of the expanded end edge 13.

The annular element 20 will be accommodated in the circular opening 14 with its flat lower surface 25 substantially aligned to the flat front surface 15 of the outer cylindrical element 2.

In order that the annular element 20 may be coupled to the inner cylindrical element 3, first series of angularly equidistant longitudinal threaded through holes 26, 26' are provided on both elements, for receiving first screw connection means 27.

For improved protection of the joint from external agents, dust and dirt, a second annular recess 39 is formed on the outer radial surface 28 of the outer cylindrical element 2, for receiving a corresponding O-ring seal 29 interposed between the annular element 20 and the outer cylindrical element 2.

In order to connect the joint 1 to the machine M or the control panel C, an annular connecting flange 31 is provided, which is adapted to be secured to the outer cylindrical element 2 via second screw connection means 32. Second series of angularly offset threaded through holes 33, 33' are formed on the flange 31 and the outer cylindrical element 2, for threadingly receiving the second screw connection means 32.

In the embodiment as shown in FIG. 1, in which the machine M is located in a lower position, the joint 1 is oriented with the annular flange 31 below the outer cylindrical element 2. Conversely, if the machine M is located in an upper position, the joint 1 may be oriented in an opposite direction, with the flange 31 located above the outer cylindrical element 2.

Possibly, to further prevent the ingress of dust or impurities into the joint 1, a third O-ring seal 34 may be provided between the flange 31 and the outer cylindrical element 2.

The third O-ring 34 may be accommodated in a third annular recess 35 formed on the flat front surface 15 of the outer cylindrical element 2, which faces the connecting flange 31.

The latter may comprise an inner peripheral portion 36 which faces the annular element 20 and has a series of third angularly equidistant holes 37 for receiving a plurality of dowels 38 designed for selective interaction with the annular element 20 namely with its flat lower surface 25, to prevent the relative rotation of the cylindrical elements 2, 3 within a predetermined angular range.

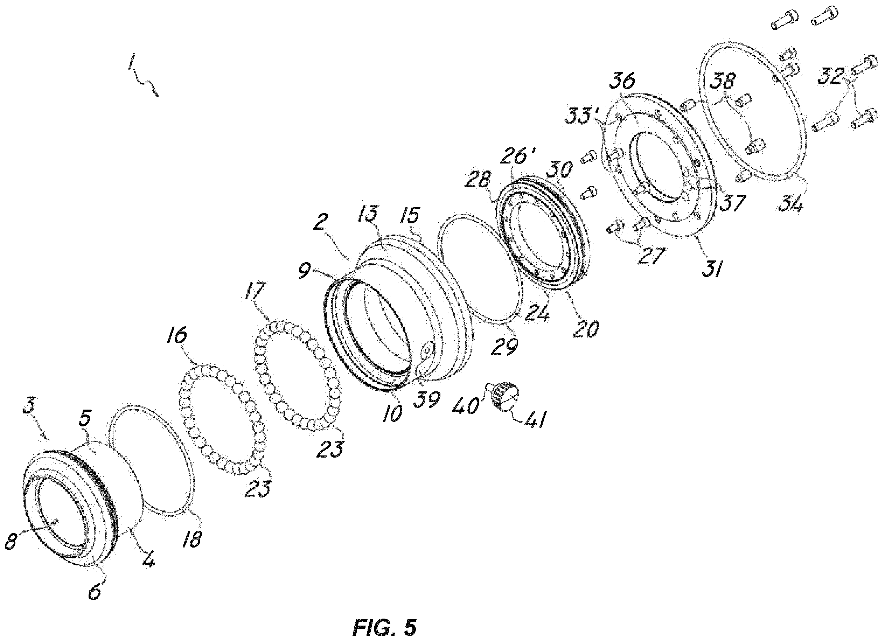

The outer cylindrical element 2 comprises a transverse threaded hole 39 at its tubular wall 9, as best shown in FIG. 5, for receiving a threaded pin 40 with a knob 41.

The threaded pin 40 is designed to interact with the outer cylindrical surface 5 of the tubular portion 4 of the inner cylindrical element 3 to prevent rotation thereof relative to the outer cylindrical element 2.

In operation, the joint 1 may be mounted to the machine M or the panel C by appropriate screw connection means, not shown, which are designed to be tightened in respective holes of the outer cylindrical element 2 and with one of the ends E of the suspension arm B fitted in the raceway 8.

With the threaded pin 40 unscrewed, the operator may freely rotate the arm B, thereby moving the panel C to the desired position. Possibly, the operator may restrict the rotation of the joint by appropriately placing the dowels 38 into their respective third longitudinal holes 37.

When the operator wants to maintain the panel C in a given fixed position, he/she may take hold of the knob 41 and rotate it for the inner end of the threaded pin 40 to interact with the outer cylindrical surface 5 of the tubular portion 4 of the outer cylindrical element 2, thereby preventing it from rotating relative to the inner cylindrical element 3.

The above disclosure clearly shows that the joint of the invention fulfills the intended objects and can particularly afford a safe, failure-free transfer of high driving or resistant torques.

The joint of the invention is susceptible of a number of changes and variants, within the inventive concept disclosed in the appended claims.

All the details thereof may be replaced by other technically equivalent parts, and the materials may vary depending on different needs, without departure from the scope of the invention.

While the joint has been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry, because it can be produced on an industrial scale in factories operating in the field of mechanical coupling systems.

## Claims

1. A rotatable joint (1) for a suspension arm (B) having ends (E) adapted to be rotatably secured to a machine (M) and/or a control panel (C) of such machine (M), comprising:
- an outer cylindrical element (2) defining a first longitudinal axis (X);
- an inner cylindrical element (3) defining a second longitudinal axis (X');
wherein said inner (3) and outer (2) cylindrical elements are mutually and rotatably coupled to rotate about a common longitudinal axis (R), with at least one first (16) and one second (17) axially offset ball bearings with substantially equal diameters interposed therebetween;
wherein said inner cylindrical element (3) and said outer cylindrical element (2) have mutually facing surfaces, which are adapted to define a first raceway (21) for a ball row (23) of said first ball bearing (16);
wherein said outer cylindrical element (2) and said inner cylindrical element (3) comprise respective tubular portions (9, 4) with mutually facing cylindrical surfaces (10, 5), said outer cylindrical element (2) having an expanded bottom edge (13) with an inner circular opening (14), there being provided an annular end element (20) different from said inner (3) and outer (2) cylindrical elements, said annular element (20) being accommodated within said circular opening (14) and coupled to one end of said inner cylindrical element (3), said outer cylindrical element (2) and said annular end element (20) having mutually facing surfaces which are adapted to define a second raceway (22) for a ball row (23) of said ball bearing (17); **characterized in that** said annular end element (20) is coupled to said inner cylindrical element (3) via first screw connection means (27) which are fitted into first series of angularly equispaced longitudinal holes (26, 26') formed in said inner cylindrical element (3) and in said annular element (20).

2. Joint as claimed in claim 1, **characterized by** comprising an annular connecting flange (31), which is adapted to be secured to said outer cylindrical element (2) for connection to a machine (M) or a control panel (C).

3. Joint as claimed in claim 2, **characterized by** comprising second screw connection means (32), which are adapted to be fitted into a second series of angularly offset longitudinal holes (33, 33'), formed in said outer cylindrical element 2) and in said connecting flange (31).

4. Joint as claimed in claim 1, **characterized in that** said inner cylindrical element (3) comprises an annular end projection (6) directed radially outwardly to define a joining step (7) having a circular arc profile with said tubular portion (4), said step having a radius of curvature (r') corresponding to the radius (r) of said balls (23).

5. Joint as claimed in claim 4, **characterized in that** said outer cylindrical element (2) comprises first (11) and second (12) axially offset grooves on the inner surface (10), said grooves (11, 12) having a circular arc profile with the same radius of curvature (r') as said balls (23) and as said joining step (7).

6. Joint as claimed in claim 5, **characterized in that** said annular element (20) has a front surface (24) formed with a circular arc profile, whose circular arc profile having a radius of curvature (r") corresponding to the radius (r) of said balls (23).

7. Joint as claimed in claim 4, **characterized in that** said first raceway (21) is delimited by said step (7) facing said first groove (11).

8. Joint as claimed in claim 5, **characterized in that** said second raceway (22) is delimited by said second groove (12) facing said specially formed surface (24) of said annular element (20) and by an end portion (5') of said outer cylindrical surface (5).

9. Joint as claimed in claim 2, **characterized in that** it comprises at least one first O-ring seal (18) interposed between said inner cylindrical element (3) and said outer cylindrical element (2), at least one second O-ring seal (30) interposed between said outer cylindrical element (2) and said annular end element (20), and a third O-ring seal (34) interposed between said outer cylindrical element (2) and said connecting flange (31).

10. Joint as claimed in claim 9, **characterized in that** it comprises a first annular recess (19) formed in said annular projection (6), a second annular recess (29) formed in said annular projection (20) and a third annular recess (35) formed in said outer cylindrical element (2) at its front surface (15), said recesses (19, 29, 35) being adapted to accommodate said first (18), said second (30) and said third O-rings (34) respectively.

11. Joint as claimed in claim 3, **characterized in that** said connecting flange (31) has an inner peripheral portion (36) that faces said annular element (20) and has a third series of holes (37) for receiving dowels (38) which are adapted to interact with said annular element (20) to prevent relative rotation of said cylindrical elements (2, 3) within a predetermined angular range.

12. Joint as claimed in claim 1, **characterized in that** said outer cylindrical element (2) has an internally threaded transverse hole (39) formed on its tubular portion (9), in which a threaded pin (40) with a knob (41) is severable to interact with said inner cylindrical element (3) for preventing relative rotation of the latter and said outer cylindrical element (2).

13. A suspension arm having opposite ends (E) coupled respectively to a machine (M) and to a control panel (C) by means of a rotatable joint (1) according to one or more of the preceding claims mounted on at least one of said ends.

## Patentansprüche

1. Ein Drehgelenk (1) für einen Aufhängungsarm (B) mit Enden (E), die geeignet sind, an einer Maschine (M) und/oder einem Bedienfeld (C) einer solchen Maschine (M) drehbar befestigt zu werden, umfassend:
- ein äußeres zylindrisches Element (2), das eine erste Längsachse (X) definiert;
- ein inneres zylindrisches Element (3), das eine zweite Längsachse (X') definiert;
wobei die inneren (3) und äußeren (2) zylindrischen Elemente miteinander und drehbar gekoppelt sind, um sich um eine gemeinsame Längsachse (R) zu drehen, wobei mindestens ein erstes (16) und ein zweites (17) axial versetztes Kugellager mit im wesentlichen gleichem Durchmesser dazwischen angeordnet sind;
wobei das innere zylindrische Element (3) und das äußere zylindrische Element (2) einander zugewandte Oberflächen aufweisen, die eine erste Laufbahn (21) für die Kugelreihe (23) des ersten Kugellagers (16) definieren;
wobei das äußere zylindrische Element (2) und das innere zylindrische Element (3) jeweilige rohrförmige Abschnitte (9, 4) mit einander zugewandten zylindrischen Oberflächen (10, 5) aufweisen, wobei das äußere zylindrische Element (2) eine erweiterte Bodenkante (13) mit einer inneren kreisförmigen Öffnung (14) aufweist, wobei ein ringförmiges, Endelement (20) vorgesehen ist, das verschieden von den inneren (3) und äußeren (2) zylindrischen Elementen ist, wobei das ringförmige Endelement (20) in der kreisförmigen Öffnung (14) aufgenommen ist und gekoppelt mit einem Ende des inneren zylindrischen Elements (3) ist, wobei das äußere zylindrische Element (2) und das ringförmige Endelement (20) einander zugewandte Oberflächen aufweisen, die eine zweite Laufbahn (22) für die Kugelreihe (23) des zweiten Kugellagers (17) definieren;
**dadurch gekennzeichnet, dass** das ringförmige Endelement (20) mit dem zylindrischen Element (3) über erste Schraubverbindungsmittel (27) gekoppelt ist, die in eine erste Reihe von winklig gleich beanstandeten Längslöchern (26, 26') eingepasst sind, die in dem inneren zylindrischen Element (3) und in dem ringförmigen Element (20) ausgebildet sind.

2. Gelenk nach Anspruch 1, **gekennzeichnet durch** einen ringförmigen Verbindungsflansch (31), der zur Verbindung mit einer Maschine (M) oder einem Bedienfeld (C) an dem äußeren zylindrischen Element (2) befestigbar ist.

3. Gelenk nach Anspruch 2, **gekennzeichnet durch** zweite Schraubverbindungsmittel (32), die in eine zweite Reihe von winkelversetzten Längslöchern (33, 33') einsetzbar sind, die in dem äußeren zylindrischen Element (2) und in dem Verbindungsflansch (31) ausgebildet sind.

4. Gelenk nach Anspruch 1, **dadurch gekennzeichnet, dass** das innere zylindrische Element (3) einen ringförmigen Endvorsprung (6) umfasst, der radial nach außen gerichtet ist, um eine mit einem Kreisbogenprofil Verbindungsstufe (7) mit dem rohrförmigen Abschnitt (4) zu definieren, wobei die Verbindungsstufe mit einem Krümmungsradius (r') vorgesehen ist, der dem Radius (r) der Kugeln (23) entspricht.

5. Gelenk nach Anspruch 4, **dadurch gekennzeichnet, dass** das äußere zylindrische Element (2) erste (11) und zweite (12) axial versetzte Nuten auf der Innenfläche (10) aufweist, wobei die Nuten (11, 12) ein kreisbogenförmiges Profil mit dem gleichen Krümmungsradius (r ') wie die Kugeln (23) und wie der Verbindungsschritt (7) aufweisen.

6. Gelenk nach Anspruch 5, **dadurch gekennzeichnet, dass** das ringförmige Element (20) eine Vorderfläche (24) aufweist, die mit einem Kreisbogenprofil ausgebildet ist, wobei das Kreisbogenprofil einen Krümmungsradius (r') aufweist, der dem Radius (r) der Kugeln (23) entspricht.

7. Gelenk nach Anspruch 4, **dadurch gekennzeichnet, dass** die erste Laufbahn (21) durch die der ersten Nut (11) zugewandte Stufe (7) begrenzt ist.

8. Gelenk nach Anspruch 5, **dadurch gekennzeichnet, dass** die zweite Laufbahn (22) durch die zweite Nut (12) begrenzt wird, die der speziell geformten Oberfläche (24) des ringförmigen Elements (20) zugewandt ist, und durch einen Endabschnitt (5 ") der äußeren zylindrischen Oberfläche (5).

9. Gelenk nach Anspruch 2, **dadurch gekennzeichnet, dass** es mindestens eine erste O-Ring-Dichtung (18) umfasst, die zwischen dem inneren zylindrischen Element (3) und dem äußeren zylindrischen Element (2) angeordnet ist, und mindestens eine zweite O-Ring-Dichtung (30), der zwischen dem äußeren zylindrischen Element (2) und dem ringförmigen Endelement (20) angeordnet ist, und eine dritte O-Ring-Dichtung (34), die zwischen dem äußeren zylindrischen Element (2) und dem Verbindungsflansch (31) angeordnet ist.

10. Gelenk nach Anspruch 9, **dadurch gekennzeichnet, dass** es umfasst: eine erste ringförmige Aussparung (19), die in dem ringförmigen Vorsprung (6) ausgebildet ist, eine zweite ringförmige Aussparung (29), die in dem ringförmigen Vorsprung (20) ausgebildet ist, und eine dritte ringförmige Aussparung (35), die an seiner Vorderfläche (15) in dem äußeren zylindrischen Element (2) ausgebildet ist, wobei die Aussparungen (19, 29, 35) jeweils den ersten (18), den zweiten (30) und den dritten O-Ring-Dichtungen (34) aufnehmen.

11. Gelenk nach Anspruch 3, **dadurch gekennzeichnet, dass** der Verbindungsflansch (31) einen inneren Umfangsabschnitt (36) aufweist, der dem ringförmigen Element (20) zugewandt ist und eine dritte Reihe von Löchern (37) zur Aufnahme von Dübeln (38) aufweist, die mit dem ringförmigen Element (20) zusammenzuwirken, um eine relative Drehung der zylindrischen Elemente (2, 3) innerhalb eines vorbestimmten Winkelbereichs zu verhindern.

12. Gelenk nach Anspruch 1, **dadurch gekennzeichnet, dass** das äußere zylindrische Element (2) eine innengewindete Querbohrung (39) aufweist, die an ihrem rohrförmigen Abschnitt (9) ausgebildet ist, in dem sich ein Gewindestift (40) mit einem Knopf (41) befindet, das abtrennbar ist, um mit dem inneren zylindrischen Element (3) zusammenzuwirken, um eine relative Drehung des inneren und des äußeren zylindrischen Elements (2) zu verhindern.

13. Ein Aufhängungsarm mit gegenüberliegenden Enden (E), die jeweils mit einer Maschine (M) und einem Bedienfeld (C) mittels eines drehbaren Gelenks (1) nach einem oder mehreren der vorhergehenden Ansprüche verbunden sind, wobei ein Gelenk (1) an mindestens einem der Enden angebracht ist.

## Revendications

1. Un joint rotatif (1) pour un bras de suspension (B) ayant des extrémités (E) adaptées pour être fixées de manière rotative à une machine (M) et/ou à un panneau de commande (C) d'une telle machine (M), comprenant:
- un élément cylindrique extérieur (2) définissant un premier axe longitudinal (X);
- un élément cylindrique interne (3) définissant un second axe longitudinal (X ');
dans lesquels lesdits éléments cylindriques interne (3) et externe (2) sont couplés de manière mutuelle et rotative pour tourner autour d'un axe longitudinal commun (R), avec au moins un premier (16) et un second (17) roulements à billes interposés entre eux et décalés axialement et ayant sensiblement égaux diamètres;
dans lequel ledit élément cylindrique intérieur (3) et ledit élément cylindrique extérieur (2) ont des surfaces opposées qui définissent un premier chemin de roulement (21) pour une rangée de billes (23) dudit premier roulement à billes (16);
dans lequel ledit élément cylindrique externe (2) et ledit élément cylindrique interne (3) comprennent des parties tubulaires respectives (9, 4) avec des surfaces cylindriques se faisant face (10, 5), ledit élément cylindrique externe (2) ayant un bord inférieur élargi (13). avec une ouverture circulaire intérieure (14), il est prévu un élément d'extrémité annulaire (20) différent desdits éléments cylindriques intérieur (3) et extérieur (2), ledit élément annulaire (20) étant logé à l'intérieur de ladite ouverture circulaire (14) et couplé à une extrémité dudit élément cylindrique interne (3), ledit élément cylindrique externe (2) et ledit élément d'extrémité annulaire (20) ayant des surfaces opposées qui sont adaptées pour définir un second chemin de roulement (22) pour une rangée de billes (23) dudit second roulement à billes (17);
**caractérisé en ce que** ledit élément d'extrémité annulaire (20) est couplé audit élément cylindrique (3) par l'intermédiaire de premiers moyens de connexion à vis (27) qui sont montés dans une première série de trous longitudinaux équidistants (26, 26 ') formés dans ledit élément cylindrique intérieur (3) et dans ledit élément annulaire (20).

2. Joint selon la revendication 1, **caractérisé en ce qu'**il comprend une bride de raccordement annulaire (31) qui est adaptée pour être fixée audit élément cylindrique extérieur (2) en vue d'une connexion à une machine (M) ou à un panneau de commande (C).

3. Joint selon la revendication 2, **caractérisé en ce qu'**il comprend des seconds moyens de connexion à vis (32), qui sont adaptés à être montés dans une seconde série de trous longitudinaux décalés angulairement (33, 33'), formés dans ledit élément cylindrique externe (2) et dans ladite bride de raccordement (31).

4. Joint selon la revendication 1, **caractérisé en ce que** ledit élément cylindrique interne (3) comprend une saillie d'extrémité annulaire (6) dirigée radialement vers l'extérieur pour définir une étape de jonction (7) ayant un profil en arc de cercle avec ladite partie tubulaire (4), cette étape ayant un rayon de courbure (r ') correspondant au rayon (r) desdites billes (23).

5. Joint selon la revendication 4, **caractérisé en ce que** ledit élément cylindrique externe (2) comprend des première (11) et seconde (12) rainures axialement décalées sur la surface interne (10), lesdites rainures (11, 12) ayant un profil en arc de cercle ayant le même rayon de courbure (r ') que lesdites billes (23) et ladite étape de jonction (7).

6. Joint selon la revendication 5, **caractérisé en ce que** ledit élément annulaire (20) a une surface avant (24) formée avec un profil d'arc circulaire, dont le profil d'arc circulaire ayant un rayon de courbure (r') correspondant au rayon (r) desdites billes (23).

7. Joint selon la revendication 4, **caractérisé en ce que** ledit premier chemin de roulement (21) est délimité par ladite étape de jonction (7) faisant face à ladite première rainure (11).

8. Joint selon la revendication 5, **caractérisé en ce que** ledit second chemin de roulement (22) est délimitée par ladite seconde rainure (12) faisant face à ladite surface spécialement formée (24) dudit élément annulaire (20) et par une partie d'extrémité (5') de ladite surface cylindrique extérieure (5).

9. Joint selon la revendication 2, **caractérisé en ce qu'**il comprend au moins une bague d'étanchéité O-ring (18) interposée entre ledit élément cylindrique intérieur (3) et ledit élément cylindrique extérieur (2), au moins une deuxième bague d'étanchéité O-ring (30) interposée entre ledit élément cylindrique extérieur (2) et ledit élément d'extrémité annulaire (20), et une troisième bague d'étanchéité O-ring (34) interposée entre ledit élément cylindrique extérieur (2) et ladite bride de raccordement (31).

10. Joint selon la revendication 9, **caractérisé en ce qu'**il comprend un premier évidement annulaire (19) formé dans ladite saillie annulaire (6), un deuxième évidement annulaire (29) formé dans ladite saillie annulaire (20) et un troisième évidement annulaire (35) formée dans ledit élément cylindrique extérieur (2) au niveau de sa surface avant (15), lesdits évidements (19, 29, 35) étant adaptés pour loger lesdites première (18), deuxième (30) et troisième (34) bague d'étanchéité O-ring respectivement.

11. Joint selon la revendication 3, **caractérisé en ce que** ladite bride de raccordement (31) présente une partie périphérique interne (36) qui fait face audit élément annulaire (20) et comporte une troisième série de trous (37) destinés à recevoir des goujons (38) qui sont adapté pour interagir avec ledit élément annulaire (20) afin d'empêcher la rotation relative desdits éléments cylindriques (2, 3) dans une plage angulaire prédéterminée.

12. Joint selon la revendication 1, **caractérisé en ce que** ledit élément cylindrique extérieur (2) comporte un trou transversal fileté intérieurement (39) formé sur sa partie tubulaire (9), dans lequel une broche filetée (40) avec un bouton (41) est séparable pour interagir avec ledit élément cylindrique intérieur (3) afin d'empêcher la rotation relative de ce dernier et dudit élément cylindrique extérieur (2).

13. Un bras de suspension ayant des extrémités opposées (E) couplées respectivement à une machine (M) et à un panneau de commande (C) au moyen d'un joint rotatif (1) selon une ou plusieurs des revendications précédentes, le joint rotatif (1) monté sur au moins une desdites éxtremités.
